# FASCICULE DE BREVET EUROPEEN

(11) **EP 1 766 634 B1**
(45) Date de publication et mention de la délivrance du brevet: **18.06.2014**
(21) Numéro de dépôt: 05789957.7
(22) Date de dépôt: 07.07.2005
(51) Int. Cl.: G21C 19/06, G21F 5/012

(54) **DISPOSITIF DE RANGEMENT POUR LE STOCKAGE ET LE TRANSPORT D'ASSEMBLAGES DE COMBUSTIBLE NUCLEAIRE**
VORRICHTUNG ZUR LAGERUNG UND ZUM TRANSPORT VON KERNBRENNSTABBÜNDELN
STORAGE DEVICE FOR STORING AND TRANSPORTING NUCLEAR FUEL ASSEMBLIES

(30) Priorité: 08.07.2004 FR 0407625
(43) Date de publication de la demande: 28.03.2007
(73) Titulaire: TN International, 78182 Montigny Le Bretonneux (FR)
(72) Inventeur: BAUDOUIN, Joël, F-91600 SAVIGNY SUR ORGE (FR); SICARD, Damien, 92100 BOULOGNE BILLANCOURT (FR); OTTON, Camille, F-78990 ELANCOURT (FR)
(74) Mandataire: Ahner, Philippe
(86) Numéro de dépôt international: PCT/FR2005/050552
(87) Numéro de publication internationale: WO 2006/005891

(56) Documents cités:
- EP-A- 1 260 990
- WO-A-96/37896
- FR-A- 2 433 226
- FR-A- 2 650 113
- FR-A1- 2 627 622
- "IMPROVING SPENT FUEL RACKS WITH AN ALUMINIUM-BASED NEUTRON ABSORBER" NUCLEAR ENGINEERING INTERNATIONAL, WILMINGTON PUBLISHING LTD, GB, vol. 34, no. 422, 1 septembre 1989 (1989-09-01), pages 34-35, XP000074685 ISSN: 0029-5507
- PATENT ABSTRACTS OF JAPAN vol. 2000, no. 24, 11 mai 2001 (2001-05-11) & JP 2001 201595 A (MITSUBISHI HEAVY IND LTD), 27 juillet 2001 (2001-07-27)

## Description

### DOMAINE TECHNIQUE

La présente invention se rapporte de façon générale à un dispositif de rangement pour le stockage et le transport d'assemblages de combustible nucléaire. Plus particulièrement mais non exclusivement, l'invention s'applique pour le transport et/ou stockage d'assemblages de combustible nucléaire irradiés.

### ETAT DE LA TECHNIQUE ANTERIEURE

Classiquement, de tels dispositifs également appelés « panier » ou « râtelier » de rangement, sont de forme cylindrique de section sensiblement circulaire, et disposent d'une pluralité de logements adjacents chacun apte à recevoir un assemblage de combustible nucléaire.

Ce type de dispositif est conçu afin de pouvoir remplir simultanément trois fonctions essentielles, qui vont être brièvement exposées ci-dessous.

Il s'agit en effet tout d'abord de la fonction de transfert thermique de la chaleur dégagée par les assemblages de combustible irradiés. Généralement, il est utilisé de l'aluminium ou l'un de ses alliages, en raison de ses bonnes propriétés de conduction thermique.

La seconde fonction concerne l'absorption neutronique, et le souci de maintenir la sous-criticité du dispositif de rangement lorsque celui-ci est chargé d'assemblages de combustible nucléaire. Ceci est réalisé en utilisant des matériaux absorbeurs de neutrons dits matériaux neutrophages, tels que le bore. Additionnellement, la sous-criticité peut également être assurée en ménageant des espaces susceptibles d'être remplis d'eau, par exemple à l'intérieur même des cloisons formant les logements du dispositif de rangement.

Enfin, la troisième fonction essentielle est relative à la rigidité ou résistance mécanique du dispositif, qui est principalement assurée par la présence d'éléments structurels, habituellement réalisés en acier. A ce titre, il est noté que la résistance mécanique globale du dispositif doit être compatible avec les exigences réglementaires de sûreté pour le transport/stockage de matières nucléaires, notamment en ce qui concerne les épreuves dites « de chute libre ».

De l'art antérieur (cf. FR 2 650 113, FR 2 433 226, EP 1 260 990, EP 0 829 088, ou JP 2001 201595, par example), on connaît plusieurs réalisations consistant à empiler et entrecroiser des éléments structurels à encoches, dans le but d'obtenir les logements adjacents du dispositif de rangement.

Néanmoins, si ce type de réalisation est effectivement capable de remplir les trois fonctions mentionnées ci-dessus, il est indiqué que de tels dispositifs à éléments structurels empilés et entrecroisés sont souvent réalisés selon une conception complexe. Cela engendre inéluctablement des inconvénients en termes de coûts, tant du point de vue de la fabrication des éléments constitutifs, que du point de vue de leur temps d'assemblage.

### EXPOSÉ DE L'INVENTION

L'invention a donc pour but de proposer un dispositif de rangement pour le stockage et le transport d'assemblages de combustible nucléaire, ce dispositif présentant une conception simplifiée par rapport à celles rencontrées antérieurement, tout en offrant des performances et des capacités au moins équivalentes à celles relatives aux réalisations de l'art antérieur.

Pour ce faire, l'invention a pour objet un dispositif de rangement pour le stockage, et le transport d'assemblages de combustible nucléaire selon l'objet de la revendication 1.

### BRÈVE DESCRIPTION DES DESSINS

Cette description sera faite au regard des dessins annexés parmi lesquels ;
- la figure 1 représente une vue en perspective d'un dispositif de rangement pour le stockage et le transport d'assemblages de combustible nucléaire, illustrant brièvement le principe de la présente invention ;
- les figures 2a et 2b représentent des vues en perspective d'un ensemble structurel à encoche utilisé dans un dispositif de rangement pour le stockage et le transport d'assemblages de combustible nucléaire selon un premier mode de réalisation préféré de la présente invention, la figure 2a étant une vue éclatée de la figure 2b ;
- la figure 3 est une vue partielle en perspective du dispositif de rangement selon le premier mode de réalisation préféré, montrant une pluralité d'ensembles structurels à encoches empilés et entrecroisés, tels que ceux représentés sur les figures 2a et 2b ;
- les figures 4a et 4b représentent des vues en perspective d'un ensemble structurel à encoche utilisé dans un dispositif de rangement pour le stockage et le transport d'assemblages de combustible nucléaire selon un second mode de réalisation préféré de la présente invention, la figure 4a étant une vue éclatée de la figure 4b ;
- la figure 5 est une vue partielle en perspective du dispositif de rangement selon le second mode de réalisation préféré, montrant une pluralité d'ensembles structurels à encoches empilés et entrecroisés, tels que ceux représentés sur les figures 4a et 4b ; et
- la figure 6 représente une vue en coupe prise selon le plan P de la figure 1, le plan P étant perpendiculaire à une direction d'empilement des ensembles structurels à encoches du dispositif de rangement.

### EXPOSÉ DÉTAILLÉ DE MODES DE RÉALISATION PRÉFÉRÉS

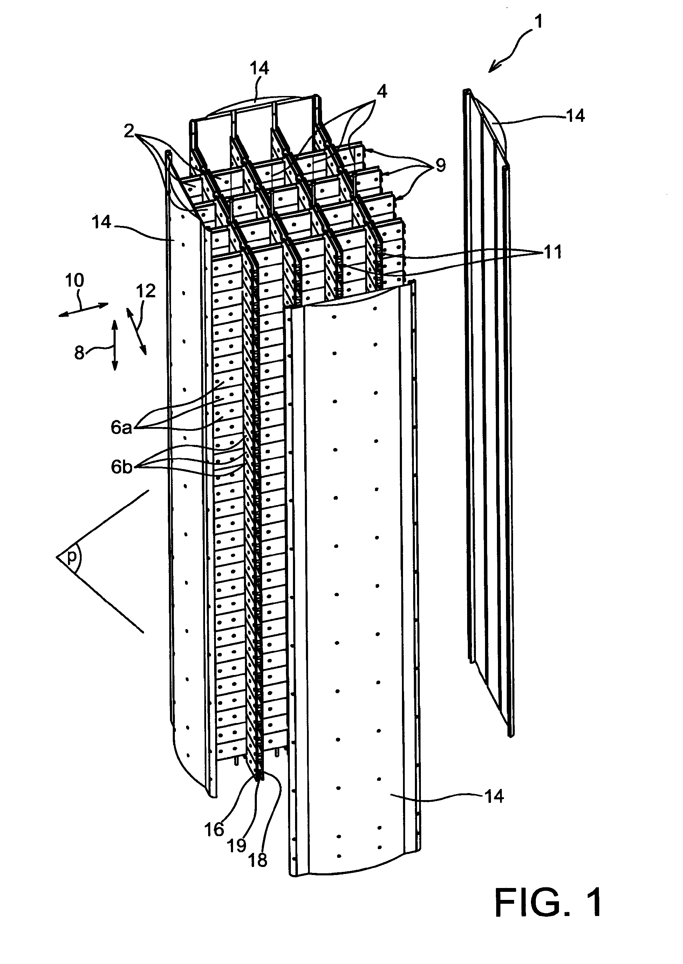

En référence à la figure 1, il est représenté un dispositif de rangement 1 prévu pour être placé dans un emballage (non représenté) destiné au transport et/ou stockage d'assemblages de combustible nucléaire (non représentés), de préférence irradiés.

Comme on peut le voir sur la figure 1, le dispositif de rangement 1 comprend une pluralité de logements adjacents 2 disposés parallèlement, ces derniers s'étendant chacun selon un axe longitudinal 4. Les logements 2 sont chacun apte à recevoir au moins un assemblage de combustible de section carrée, et de préférence un seul.

Les logements 2 sont donc prévus de manière à être juxtaposés les uns aux autres. Ils sont réalisés par l'intermédiaire d'une pluralité d'ensembles structurels 6a, 6b à encoches, ces ensembles 6a, 6b étant empilés selon une direction d'empilement qui est de préférence parallèle aux axes longitudinaux 4 des logements 2, comme le montre schématiquement la flèche 8 sur la figure 1. Par convention, dans la suite de la description, on admet que la notion de « hauteur » est à associer à la direction d'empilement 8.

Comme on peut l'apercevoir sur cette même figure 1, les ensembles structurels à encoches 6a, 6b sont entrecroisés, de préférence de manière perpendiculaire. En d'autres termes, les ensembles 6a sont situés parallèlement les uns aux autres, tandis que les ensembles 6b sont également situés parallèlement les uns aux autres, mais perpendiculairement aux ensembles 6a.

Lorsqu'ils sont empilés selon la direction d'empilement 8, les ensembles structurels 6a, 6b forment conjointement la paroi latérale de chacun des logements 2, cette paroi latérale disposant par conséquent d'une section transversale de forme sensiblement carrée. Bien entendu, la paroi latérale des logements 2 pourrait se présenter sous toutes autres formes autorisant le maintien d'un assemblage de combustible de forme différente, telles qu'une forme hexagonale.

Ainsi, dans l'exemple représenté sur la figure 1 où les logements 4 sont de section carrée, les ensembles structurels 6a forment des cloisons verticales 9 parallèles à une direction 10, tandis que les ensembles structurels 6b forment des cloisons verticales 11 parallèles à une direction 12, les directions 8, 10 et 12 étant perpendiculaires entre-elles.

De manière préférée, chacun des ensembles 6a, 6b s'étend entre deux cloisons périphériques 14 auxquelles il est solidarisé, ces cloisons périphériques 14 permettant de fermer latéralement le dispositif de rangement 1. A titre d'exemple indicatif et comme représenté, ces cloisons périphériques 14 peuvent être prévues au nombre de quatre, s'étendre chacune sur toute la hauteur du dispositif 1, et constituer une partie périphérique de la paroi latérale des logements périphériques 2 de ce dispositif 1.

Par ailleurs, comme cela ressort clairement de ce qui précède, il est noté que chacune des cloisons verticales 9, 11 participe à la formation d'une partie de la paroi latérale de plusieurs logements 2 situés de part et d'autre de la cloison verticale concernée.

Comme cela va être expliqué de manière détaillée ci-dessous, chacun des ensembles structurels à encoches 6a, 6b est réalisé à l'aide de deux plats parallèles 16, 18, réalisés dans un alliage d'aluminium et de bore.

Ainsi, toujours en référence à la figure 1, on peut voir que chacun des plats 16, 18 est parallèle à la direction d'empilement 8 ainsi qu'à l'une des directions 10, 12, et participe à la définition d'une pluralité de logements 2.

D'autre part, chacun des ensembles structurels à encoches 6a, 6b présente une structure intermédiaire 19 réalisée au moins partiellement en acier, cette structure intermédiaire étant située entre les plats 16, 18, et en contact avec ceux-ci.

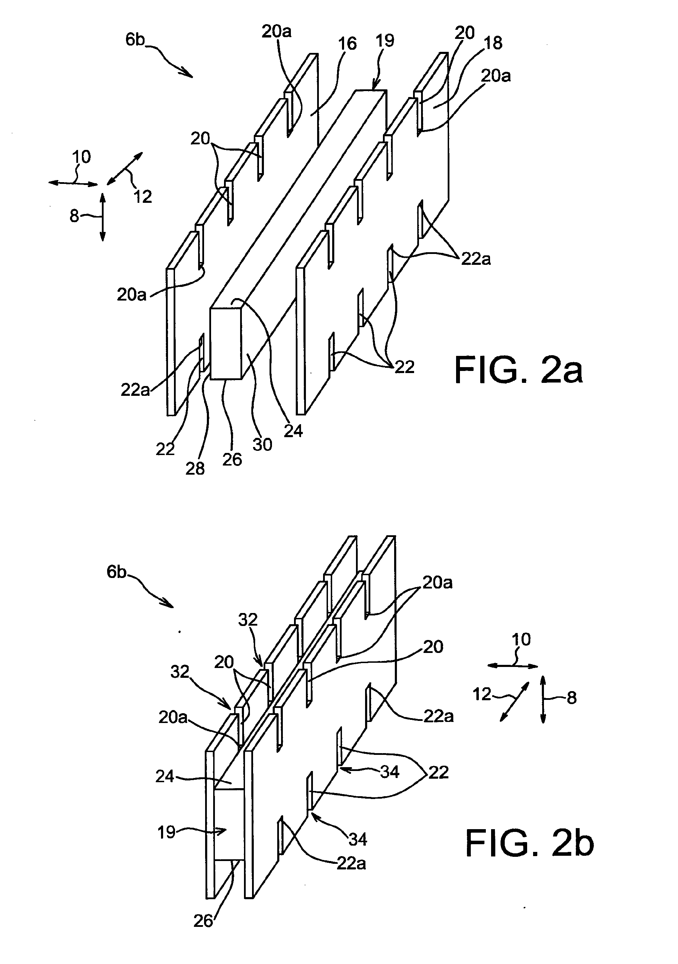

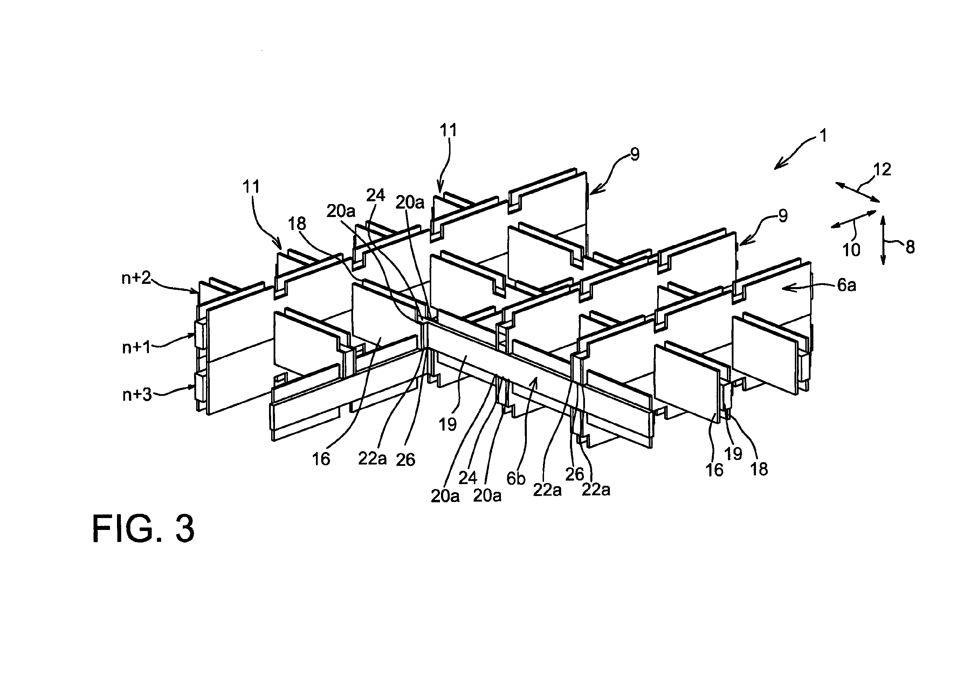

En référence à présent à la figure 3, on peut apercevoir une partie d'un dispositif de rangement 1 selon un premier mode de réalisation préféré de la présente invention, ce dispositif 1 étant réalisé à l'aide d'un empilement d'ensembles structurels à encoches 6a, 6b tels que celui représenté sur les figures 2a et 2b. A ce titre, il est noté que les ensembles 6a constituant les cloisons 9 sont identiques ou similaires aux ensembles 6b constituant les cloisons 11, et dont l'un d'entre eux va à présent être décrit en référence aux figures 2a et 2b.

Dans ce premier mode de réalisation préféré de la présente invention, l'ensemble structurel à encoches 6b comporte donc deux plats 16, 18 présentant chacun des entailles supérieures 20 ainsi que des entailles inférieures 22, ces entailles 20, 22 s'ouvrant respectivement vers le haut et vers le bas dans la direction d'empilement 8. De plus, chaque entaille 20, 22 dispose d'un chant d'encoche 20a, 22a correspondant à un fond de cette entaille, et prenant de préférence la forme d'une surface plane située parallèlement aux directions 10 et 12, c'est-à-dire perpendiculairement à la direction d'empilement 8.

L'ensemble 6b comporte également une structure intermédiaire 19, qui dans ce premier mode de réalisation préféré, est réalisée de manière à former une pièce unique en acier, de préférence en acier inoxydable. Cette pièce peut ainsi être réalisée d'un seul tenant puis usinée, ou encore être fabriquée à l'aide d'éléments soudés les uns aux autres.

La structure intermédiaire 19 présente une surface supérieure 24 ainsi qu'une surface inférieure 26 qui sont toutes deux situées parallèlement aux directions 10 et 12. Par ailleurs, elle comporte aussi deux surfaces latérales 28, 30 situées parallèlement aux directions 8 et 12, et destinées à être respectivement au contact des plats 16, 18 lorsque l'ensemble 6b est assemblé sur l'empilement. A ce titre, il est précisé que cette structure intermédiaire 19 peut être assemblée rigidement sur les plats 16, 18 par des moyens de fixation classiques (non représentés), ou bien être libre par rapport à ceux-ci comme cela sera explicité ultérieurement en référence à la figure 3.

En référence à la figure 2b sur laquelle la structure intermédiaire 19 est montrée dans une position « assemblée » par rapport aux plats 16, 18, il est précisé qu'au niveau d'une partie supérieure de l'ensemble 6b, la surface supérieure 24 de la structure intermédiaire 19 se situe dans un plan de niveau légèrement inférieur à celui du plan dans lequel se trouvent les chants d'encoche 20a, les deux plans susmentionnés étant parallèles entre eux. En d'autres termes, dans cette position assemblée, les chants d'encoche 20a font de préférence légèrement saillie vers le dessus par rapport à la surface supérieure 24 de la structure intermédiaire 19.

De plus, une pluralité d'encoches supérieures 32 de l'ensemble 6b sont chacune formées par deux entailles 20 situées en regard l'une de l'autre et appartenant respectivement aux plats 16 et 18. Ainsi, il est clair que le fond de chaque encoche supérieure 32 est une surface plane intégrant les deux chants d'encoche 20a situés à distance l'un de l'autre. Comme cela a été évoqué ci-dessus, la surface supérieure 24 de la structure intermédiaire 19 ne participe de préférence pas à la définition des fonds des encoches supérieures 32.

De façon analogue, au niveau d'une partie inférieure de l'ensemble 6b, les chants d'encoche 22a forment une surface plane unique qui se situe dans un plan de niveau légèrement inférieur à celui du plan dans lequel se trouve la surface inférieure 26 de la structure intermédiaire 19, les deux plans susmentionnés étant également parallèles entre eux.

Par ailleurs, une pluralité d'encoches inférieures 34 de l'ensemble 6b sont chacune formées par deux entailles 22 situées en regard l'une de l'autre et appartenant respectivement aux plats 16 et 18. Ici aussi, il est clair que le fond de chaque encoche inférieure 34 est une surface plane intégrant les deux chants d'encoche 22a agencés à distance l'un de l'autre, mais ne comprenant de préférence pas la surface inférieure 26 de la structure intermédiaire 19.

Au vu de ce qui précède, il est donc évident que chaque ensemble 6a, 6b est de préférence conçu de sorte que la distance entre les surfaces inférieure 26 et supérieure 24 de la structure intermédiaire 19 soit inférieure à la distance séparant un chant d'encoche 20a quelconque prévu sur l'un quelconque de deux plats 16, 18, et le chant d'encoche 22a situé sur le même plat et dans le prolongement de ce chant d'encoche 20a dans la direction d'empilement 8.

Naturellement, ces encoches 32, 34 sont destinées à s'emboîter dans des encoches identiques ou similaires appartenant à des ensembles structurels 6a adjacents, dans le but évident de permettre la réalisation de l'empilement entrecroisé de ces ensembles 6a, 6b.

En outre, il est précisé que l'ensemble 6b décrit en référence aux figures 2a et 2b dispose d'une section en forme générale de H, la structure intermédiaire 19 formant l'âme ou « la barre liante » de ce H, et les deux plats 16, 18 constituant respectivement les deux flancs de ce H.

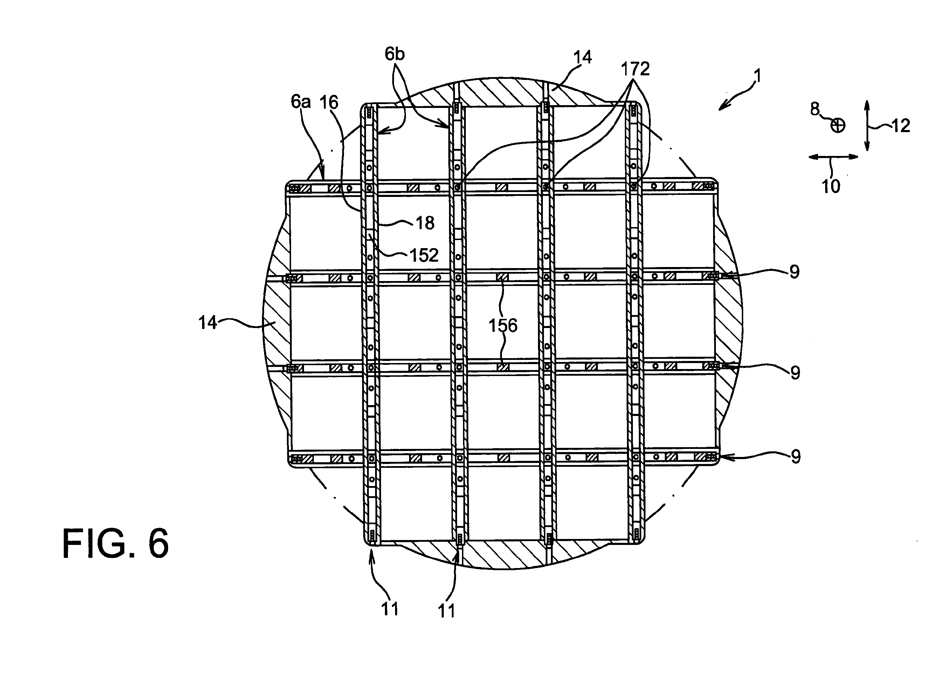

Cette configuration est bien entendu tout à fait adaptée pour la création d'espaces susceptibles d'être remplis d'eau, dans le but d'assurer le maintien de la sous-criticité du dispositif 1. A cet effet, bien que cela ne soit pas représenté pour ce mode de réalisation, mais uniquement sur la figure 6 pour le second mode de réalisation préféré qui sera exposé ci-après, il est indiqué que les structures intermédiaires 19 disposent préférentiellement de trous de passage permettant à l'eau, lors des opérations de drainage ou de remplissage du dispositif de rangement 1, de s'écouler dans les espaces précités à la même vitesse qu'elle s'écoule dans les logements 2.

En référence à nouveau à la figure 3, on voit une partie du dispositif de rangement 1 selon le premier mode de réalisation préféré, dont les ensembles structurels 6a, 6b disposent chacun d'une structure intermédiaire 19 qui n'est pas mécaniquement liée aux plats 16, 18 associés. En effet, la structure intermédiaire 19 d'un ensemble 6a, 6b est uniquement en contact latéral avec les plats 16, 18, sans être solidarisée à ceux-ci.

Sur cette figure 3 où une pluralité d'ensembles 6a, 6b sont empilés et entrecroisés, on note tout d'abord la présence d'une couche n+1 d'ensembles 6a parallèles les uns aux autres. En outre, une couche n+2 est située directement au-dessous de la couche n+1 dans la direction d'empilement 8, et est constituée d'ensembles 6b coopérant avec les ensembles 6a de la couche n+1, par l'intermédiaire des encoches 32, 34. A ce titre, les ensembles 6b de la couche n+2 et les ensembles 6a de la couche n+1 sont donc agencés de manière directement consécutive dans la direction d'empilement 8, et sont disposés de façon croisée les uns par rapport aux autres.

Enfin, une couche n+3 est située directement au-dessous de la couche n+2 dans la direction d'empilement 8, et est constituée d'ensembles 6a coopérant avec les ensembles 6b de la couche n+2, par l'intermédiaire des encoches 32, 34. Les ensembles 6b de la couche n+2 et les ensembles 6a de la couche n+3 sont par conséquent agencés de manière directement consécutive dans la direction d'empilement 8, et sont disposés de façon croisée les uns par rapport aux autres. D'autre part, comme cela est visible sur la figure 3, les ensembles structurels 6a des couches n+1 et n+3 sont également en contact deux à deux au niveau des chants des plats 16, 18 (non référencés) situés entre les encoches 32, 34.

D'une façon plus générale, il est précisé que les ensembles structurels appartenant à des couches n+x et n+x+2 sont en contact deux à deux au niveau des plats, afin de former à l'aide de ces mêmes plats des parois latérales de logements entièrement continues dans la direction d'empilement 8. C'est donc le contact entre les chants des plats 16, 18 situés entre les entailles 20, 22 qui est privilégié lors de l'assemblage des ensembles structurels 6a, 6b, et non le contact des chants d'encoches 20a, 22b coopérant deux à deux.

Pour illustrer la manière dont s'opère le maintien des structures intermédiaires 19 dans la direction d'empilement 8, on considère un ensemble quelconque 6b de la couche n+2 de la figure 3. La structure intermédiaire 19 de cet ensemble 6b est apte à être maintenue vers le haut dans la direction d'empilement 8 à l'aide des ensembles 6a de la couche n+1 directement consécutive, par la coopération des encoches supérieures 32 de l'ensemble 6b considéré, respectivement avec l'une des encoches inférieures 34 de chacun des ensembles 6a de la couche n+1 (les références numériques 32 et 34 n'étant pas indiquées sur la figure 3).

Plus précisément, pour garantir le contact indiqué ci-dessus entre les chants des plats de deux ensembles structurels appartenant respectivement à des couches n+x et n+x+2, lorsque les encoches 32, 34 sont emboîtées deux à deux comme représenté, un jeu fonctionnel est réalisé entre le fond de chacune des encoches supérieures 32 concernées et le fond de son encoche inférieure 34 associée. De ce fait, lorsque le dispositif est positionné verticalement comme montré sur la figure 1, il existe par conséquent également un jeu entre la surface supérieure 24 de la structure intermédiaire 19, et les chants d'encoche 22a des encoches inférieures 34 concernées.

De manière analogue, la structure intermédiaire 19 de cet ensemble 6b est maintenue vers le bas dans la direction d'empilement 8 à l'aide des ensembles 6a de la couche n+3 directement consécutive, par la coopération des encoches inférieures 34 de l'ensemble 6b considéré, respectivement avec l'une des encoches supérieures 32 de chacun des ensembles 6a de la couche n+3.

Ici encore, lorsque les encoches 32, 34 sont emboîtées deux à deux comme représenté, un jeu fonctionnel est réalisé entre le fond de chacune des encoches inférieures 34 concernées et le fond de son encoche supérieure 32 associée. De plus, il est noté que la surface inférieure 26 de la structure 19 est, du fait de la gravité, en contact plan avec les deux chants d'encoche en regard 20a constituant l'encoche supérieure 32 associée.

Ainsi, bien que les structures intermédiaires 19 des différents ensembles 6a, 6b ne soient pas en contact entre elles, on peut facilement comprendre qu'il n'est pas nécessaire de lier mécaniquement la structure 19 aux plats 16, 18 pour obtenir un maintien de cette structure 19 selon la hauteur, ce qui procure un avantage considérable en termes de temps et de coûts de montage du dispositif de rangement 1.

Comme cela a été indiqué précédemment, dans la position verticale représentée sur la figure 1, la surface supérieure 24 de la structure intermédiaire 19 n'est pas en contact avec les chants d'encoche 22a des encoches inférieures 34 située en regard et au-dessus de cette surface 24. Or il a également été précisé que la structure intermédiaire 19 était apte à être maintenue dans la direction d'empilement 8 à l'aide des ensembles 6a de la couche n+1 directement consécutive. Cela s'explique par le fait que la surface supérieure 24 de la structure intermédiaire 19 est susceptible de venir en butée contre les chants d'encoche 22a des encoches inférieures 34 prévues sur les ensembles 6a de la couche n+1, lorsque le dispositif 1 n'est plus disposé verticalement, mais par exemple horizontalement tel que cela est rencontré durant les phases de transport de ce dispositif.

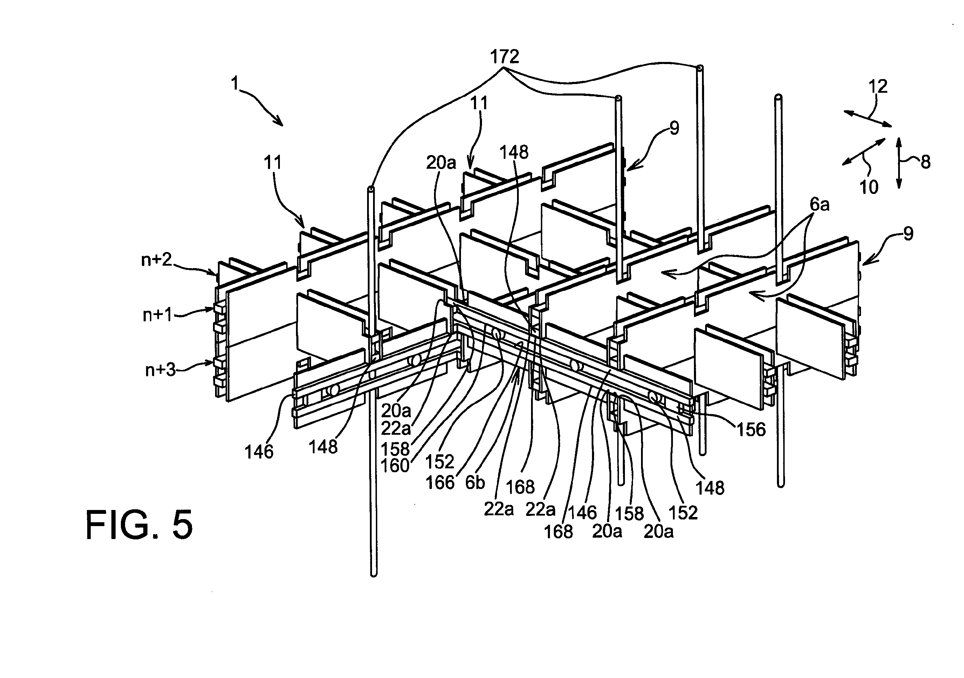

En référence à présent à la figure 5, on peut apercevoir une partie d'un dispositif de rangement 1 selon un second mode de réalisation préféré de la présente invention, ce dispositif 1 étant relativement similaire à celui du premier mode de réalisation préféré. Par conséquent, sur les figures, les éléments portant les mêmes références numériques correspondent à des éléments identiques ou similaires.

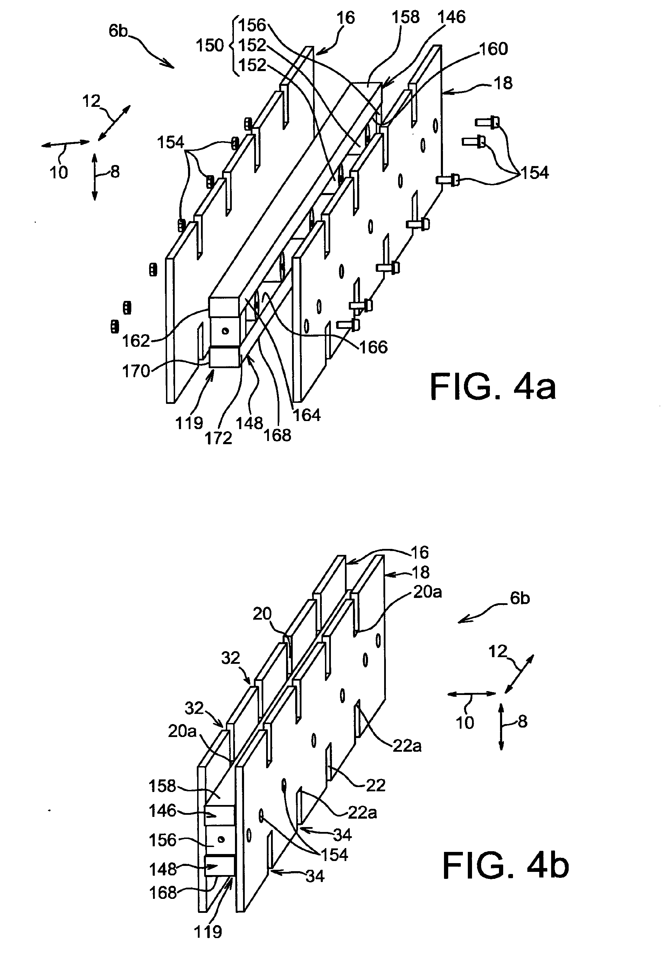

Le dispositif 1 est donc réalisé à l'aide d'un empilement d'ensembles structurels à encoches 6a, 6b tels que celui représenté sur les figures 4a et 4b. Ici aussi, il est noté que les ensembles 6a constituant les cloisons 9 sont identiques ou similaires aux ensembles 6b constituant les cloisons 11, et dont l'un d'entre eux va à présent être décrit en référence aux figures 4a et 4b.

Dans ce second mode de réalisation préféré de la présente invention, l'ensemble structurel à encoches 6b comporte donc deux plats 16, 18 identiques ou similaires à ceux décrits précédemment, dans la mesure où ils disposent d'entailles supérieures 20 et inférieures 22 présentant chacune un chant d'encoche 20a, 22a.

L'ensemble 6b comporte également une structure intermédiaire 119, qui diffère de la structure 19 du premier mode de réalisation préféré par le fait qu'elle comprend notamment deux barres en acier 146, 148 indépendantes l'une de l'autre, donc ne formant pas une pièce unique, et qui sont de préférence réalisées en acier inoxydable.

La structure intermédiaire 119 est également constituée par des moyens d'espacement 150 pourvue entre une barre supérieure 146 et une barre inférieure 148, ces barres 146, 148 s'étendant d'un bout à l'autre de l'ensemble 6b considéré, de préférence parallèlement à la direction 12 et perpendiculairement aux directions 8 et 10.

Les moyens d'espacement 150, qui sont susceptibles d'être en contact avec chacune des barres 146, 148, comprennent par exemple une pluralité d'entretoises 152 en acier disposées de manière espacée selon la direction 12, tout le long de ces barres 146, 148. Chacune de ces entretoises 152 est en contact avec les deux plats 16, 18 auxquels elle est solidarisée à ses deux extrémités, à l'aide de moyens de fixation 154 du type vis/écrou ou rivet. Pour autoriser un tel assemblage, les plats 16, 18 sont percés en conséquence, et chaque entretoise 152 présente une ouverture (non référencée) s'étendant selon la direction 10 et étant traversée par les moyens de fixation 154. A titre indicatif, au niveau de chacune des deux extrémités des barres 146, 148, les moyens d'espacement 150 peuvent présenter un élément parallélépipédique ou cubique 156, également solidarisé aux deux plats 16, 18 à l'aide de moyens de fixation 154 du type vis/écrou ou rivet. Naturellement, pour éviter l'endommagement des assemblages de combustible nucléaire reposant dans les logements 2, les moyens de fixation 154 sont assemblés sur les plats 16, 18 de façon à ne pas faire saillie de ceux-ci, et donc de manière à ne pas pénétrer à l'intérieur de ces logements 2.

Quelle que soit la conception retenue pour les moyens d'espacement 150, il est noté que la barre supérieure 146 dispose d'une surface supérieure 158 ainsi que d'une surface inférieure 160 qui sont toutes deux situées parallèlement aux directions 10 et 12. Par ailleurs, elle comporte aussi deux surfaces latérales 162, 164 situées parallèlement aux directions 8 et 12, et destinées à être respectivement en regard des plats 16, 18 lorsque l'ensemble 6b est assemblé sur l'empilement.

De la même façon, la barre inférieure 148 dispose d'une surface supérieure 166 ainsi que d'une surface inférieure 168 qui sont toutes deux situées parallèlement aux directions 10 et 12. Elle comporte également deux surfaces latérales 170, 172 situées parallèlement aux directions 8 et 12, et destinées à être respectivement en regard des plats 16, 18 lorsque l'ensemble 6b est assemblé sur l'empilement.

En outre, comme cela est clairement visible sur la figure 4a, la surface inférieure 160 de la barre supérieure 146 et la surface supérieure 166 de la barre inférieure 148 ont toutes les deux la liberté de venir au contact des entretoises 152 et des éléments cubiques 156 des moyens d'espacement 150.

En référence à la figure 4b sur laquelle la structure intermédiaire 119 est montrée dans une position « assemblée » par rapport aux plats 16, 18, il est précisé qu'au niveau d'une partie supérieure de l'ensemble 6b, la surface supérieure 158 de la barre supérieure 146 se situe dans un plan de niveau légèrement inférieur à celui du plan dans lequel se trouvent les chants d'encoche 20a, les deux plans susmentionnés étant parallèles entre eux. En d'autres termes, dans cette position assemblée, les chants d'encoche 20a font saillie vers le dessus par rapport à la surface supérieure 158 de la barre supérieure 146.

De plus, une pluralité d'encoches supérieures 32 de l'ensemble 6b sont chacune formées par deux entailles 20 situées en regard l'une de l'autre et appartenant respectivement aux plats 16 et 18. Ainsi, il est clair que le fond de chaque encoche supérieure 32 est une surface plane intégrant les deux chants d'encoche 20a situés à distance l'un de l'autre. Comme cela a été évoqué ci-dessus, la surface supérieure 158 de la barre supérieure 146 ne participe de préférence pas à la définition des fonds des encoches supérieures 32.

De façon analogue, au niveau d'une partie inférieure de l'ensemble 6b, les chants d'encoche 22a forment une surface plane unique qui se situe dans un plan de niveau légèrement inférieur à celui du plan dans lequel se trouve la surface inférieure 168 de la barre inférieure 148, les deux plans précités étant également parallèles entre eux.

Par ailleurs, une pluralité d'encoches inférieures 34 de l'ensemble 6b sont chacune formées par deux entailles 22 situées en regard l'une de l'autre et appartenant respectivement aux plats 16 et 18. Ici aussi, il est donc clair que le fond de chaque encoche inférieure 34 est une surface plane intégrant les deux chants d'encoche 22a agencés à distance l'un de l'autre, mais ne comprenant de préférence pas la surface inférieure 168.

Au vu de ce qui précède, il est donc évident que chaque ensemble 6a, 6b est de préférence conçu de sorte que la distance entre les surfaces inférieure 168 et supérieure 158 de la structure intermédiaire 119 soit inférieure à la distance séparant un chant d'encoche 20a quelconque prévu sur l'un quelconque de deux plats 16, 18, et le chant d'encoche 22a situé sur le même plat et dans le prolongement de ce chant d'encoche 20a dans la direction d'empilement 8.

Comme cela a été indiqué antérieurement, ces encoches 32, 34 sont destinées à coopérer avec des encoches identiques ou similaires appartenant à des ensembles structurels 6a adjacents, dans le but évident de permettre la réalisation de l'empilement entrecroisé de ces ensembles 6a, 6b.

L'ensemble 6b décrit en référence aux figures 4a et 4b dispose d'une section en forme générale de H, la structure intermédiaire 119 formant l'âme ou « la barre liante » de ce H, et les deux plats 16, 18 constituant respectivement les deux flancs de ce H. A titre indicatif, il peut être prévu un jeu faible entre chacune des barres 146, 148 et les plats 16, 18 de l'ensemble 6b.

En référence à nouveau à la figure 5, on voit une partie du dispositif de rangement 1 selon le second mode de réalisation préféré, où les ensembles structurels 6a, 6b disposent chacun d'une structure intermédiaire 119 dont les deux barres 146, 148 ne sont pas mécaniquement liées aux plats 16, 18 associés.

Sur cette figure 5 similaire à la figure 3 où une pluralité d'ensembles 6a, 6b sont empilés et entrecroisés, on note tout d'abord la présence d'une couche n+1 d'ensembles 6a parallèles les uns aux autres. En outre, une couche n+2 est située directement au-dessous de la couche n+1 dans la direction d'empilement 8, et est constituée d'ensembles 6b coopérant avec les ensembles 6a de la couche n+1, par l'intermédiaire des encoches 32, 34. Les ensembles 6b de la couche n+2 et les ensembles 6a de la couche n+1 sont donc agencés de manière directement consécutive dans la direction d'empilement 8, et sont disposés de façon croisée les uns par rapport aux autres.

Ici encore, une couche n+3 est située directement au-dessous de la couche n+2 dans la direction d'empilement 8, et est constituée d'ensembles 6a coopérant avec les ensembles 6b de la couche n+2, par l'intermédiaire des encoches 32, 34. Les ensembles 6b de la couche n+2 et les ensembles 6a de la couche n+3 sont par conséquent agencés de manière directement consécutive dans la direction d'empilement 8, et sont disposés de façon croisée les uns par rapport aux autres.

D'une façon plus générale, il est précisé que les ensembles structurels appartenant à des couches n+x et n+x+2 sont en contact deux à deux au niveau des plats, afin de former à l'aide de ces mêmes plats des parois latérales de logements entièrement continues dans la direction d'empilement 8. Comme dans le premier mode de réalisation préféré, c'est donc le contact entre les chants des plats 16, 18 situés entre les entailles 20, 22 qui est privilégié lors de l'assemblage des ensembles structurels 6a, 6b, et non le contact des chants d'encoches 20a, 22b coopérant deux à deux.

Pour illustrer la manière dont s'opère le maintien des deux barres 146, 148 des structures intermédiaires 119 dans la direction d'empilement 8, on considère un ensemble quelconque 6b de la couche n+2 de la figure 5.

La barre supérieure 146 de cet ensemble 6b est apte à être maintenue vers le haut dans la direction d'empilement 8 à l'aide des ensembles 6a de la couche n+1 directement consécutive, par la coopération des encoches supérieures 32 de l'ensemble 6b considéré, respectivement avec l'une des encoches inférieures 34 de chacun des ensembles 6a de la couche n+1 (les références numériques 32 et 34 n'étant pas indiquées sur la figure 5).

Plus précisément, pour garantir le contact indiqué ci-dessus entre les chants des plats de deux ensembles appartenant respectivement à des couches n+x et n+x+2, lorsque les encoches 32, 34 sont emboîtées deux à deux comme représenté, un jeu fonctionnel est réalisé entre le fond de chacune des encoches supérieures 32 concernées et le fond de son encoche inférieure 34 associée. De ce fait, lorsque le dispositif 1 est positionné verticalement comme représenté sur la figure 1, les chants d'encoche 20a ne sont pas en contact avec les chants d'encoche 22a associés, et il existe par conséquent également un jeu entre la surface supérieure 158 de la barre supérieure 146, et les chants d'encoche 22a des encoches inférieures 34 concernées.

En outre, la barre supérieure 146 de cet ensemble 6b est simplement maintenue vers le bas dans la direction d'empilement 8 par le contact entre sa surface inférieure 160 et les moyens d'espacement 150, ce contact étant obtenu du fait de la gravité.

De manière analogue, La barre inférieure 148 de cet ensemble 6b est maintenue vers le bas dans la direction d'empilement 8 à l'aide des ensembles 6a de la couche n+3 directement consécutive, par la coopération des encoches inférieures 34 de l'ensemble 6b considéré, respectivement avec l'une des encoches supérieures 32 de chacun des ensembles 6a de la couche n+3.

Ici encore, lorsque les encoches 32, 34 sont emboîtées deux à deux comme représenté, un jeu fonctionnel est réalisé entre le fond de chacune des encoches inférieures 34 concernées et le fond de son encoche supérieure 32 associée. De plus, il est noté que la surface inférieure 168 de la barre inférieure 148 est, du fait de la gravité, en contact plan avec les deux chants d'encoche en regard 20a constituant l'encoche supérieure 32 associée.

La barre inférieure 148 de cet ensemble 6b est simplement maintenue vers le haut dans la direction d'empilement 8 par les moyens d'espacement 150, bien que l'on puisse noter la présence d'un jeu entre la surface supérieure 166 et ces moyens d'espacement 150.

En outre, il découle de ce qui précède qu'au niveau de chaque emboîtement entre une encoche supérieure 32 d'un ensemble 6a, 6b et une encoche inférieure 34 d'un ensemble 6b, 6a directement consécutif, les barres supérieure 146 et inférieure 148 impliquées sont perpendiculaires entre elles, et de préférence traversées par des tirants au niveau de leur zone d'intersection, comme cela sera explicité ci-après.

Dans ce second mode de réalisation préféré, on peut facilement comprendre qu'il n'est avantageusement pas nécessaire de lier mécaniquement les barres 146, 148 aux plats 16, 18 pour obtenir un maintien de celles-ci selon la hauteur.

Comme cela a été indiqué précédemment, dans la position verticale représentée sur la figure 1, la surface supérieure 158 de la barre supérieure 146 n'est pas en contact avec les chants d'encoche 22a des encoches inférieures 34 située en regard et au-dessus de cette surface 24. Or il a également été précisé que la barre supérieure 146 était apte à être maintenue dans la direction d'empilement 8 à l'aide des ensembles 6a de la couche n+1 directement consécutive. Cela s'explique par le fait que la surface supérieure 146 de est susceptible de venir en butée contre les chants d'encoche 22a des encoches inférieures 34 prévues sur les ensembles 6a de la couche n+1, lorsque le dispositif 1 n'est plus disposé verticalement, mais par exemple horizontalement tel que cela est rencontré durant les phases de transport de ce dispositif.

De la même façon, dans certaines circonstances, la surface supérieure 166 de la barre inférieure 148 est susceptible de venir en butée contre les entretoises 152 et les éléments cubiques 156 des moyens d'espacement 150, impliquant alors une perte de contact entre la surface inférieure 168 de cette barre 148, et les chants d'encoche 20a des encoches supérieures 32 prévues sur les ensembles 6a de la couche n+3.

En référence conjointement aux figures 5 et 6, on voit qu'au niveau de chacune des intersections ou entrecroisements entre les cloisons verticales 9 parallèles à la direction 10 et les cloisons verticales 11 parallèles à une direction 12, un tirant 172 s'étend d'un bout à l'autre du dispositif 1 selon la direction d'empilement 8, à travers les ensembles structurels 6a, 6b.

Les tirants 172, de préférence réalisés en acier inoxydable, permettent ainsi d'assurer la résistance mécanique des zones du dispositif de rangement 1 où les encoches 32, 34 sont emboîtées deux à deux.

Comme cela est clairement visible sur la figure 5, chaque tirant 172 traverse les structures intermédiaires 119 des ensembles 6a, 6b, et plus précisément les deux barres 146, 148 de chacune de ces structures 119. De cette façon, pour chaque coopération entre une encoche inférieure 34 d'un premier ensemble 6a, 6b et une encoche supérieure 32 d'un second ensemble 6b, 6a entrecroisé et directement consécutif dans la direction d'empilement 8, la barre inférieure 148 du premier ensemble 6a, 6b étant en contact avec les chants d'encoche 20a, les sollicitations mécaniques des tirants 172 sont donc fortement diminuées. Par conséquent, cela permet avantageusement de diminuer le diamètre des tirants 172, ainsi que leur masse associée.

En référence plus spécifiquement à la figure 6, on peut voir que les logements 2, dont la paroi latérale est formée par les cloisons verticales 9, 11, 14 sont chacun délimités par une surface latérale 174, de section en forme de carré. Pour tous les modes de réalisation préférés évoqués ci-dessus, on peut prévoir que cette surface latérale 174 est au moins partiellement constituée par les plats 16, 18 des ensembles structurels 6a, 6b formant respectivement les cloisons verticales 9, 11.

Comme cela est clairement visible sur la figure 6, seule la surface latérale 174 des logements périphériques 2 n'est pas entièrement constituée par les plats 16, 18, puisqu'une partie de la surface latérale de chacun de ces logements périphériques 2 est dans ce cas également formée à l'aide d'une cloison périphérique 14.

Bien entendu, diverses modifications peuvent être apportées par l'homme du métier aux dispositifs de rangement 1 qui viennent d'être décrits, uniquement à titre d'exemples non limitatifs.

## Revendications

1. Dispositif de rangement (1) pour le stockage et le transport d'assemblages de combustible nucléaire, ledit dispositif comportant une pluralité de logements adjacents (2), chacun présentant une paroi latérale et étant apte à recevoir un assemblage de combustible nucléaire, lesdites parois latérales étant réalisées à l'aide d'ensembles structurels à encoches (6a, 6b) empilés et entrecroisés comportant chacun deux plats espacés (16, 18) ainsi qu'une structure intermédiaire (19, 119) située entre les plats (16, 18) et en contact avec ceux-ci, chaque ensemble structurel à encoches (6a, 6b) disposant d'une section en forme générale de H, les deux plats (16, 18) constituant respectivement les deux flancs de ce H et la structure intermédiaire formant l'âme de ce H,
**caractérisé en ce que** lesdits deux plats (16, 18) sont réalisés dans un matériau neutrophage en alliage d'aluminium comprenant du bore, et **en ce que** ladite structure intermédiaire (19, 119) est au moins partiellement réalisée en acier.

2. Dispositif de rangement (1) selon la revendication 1, **caractérisé en ce que** chaque logement (2) présente une surface latérale (174) le délimitant, ladite surface latérale (174) étant au moins partiellement constituée par les plats (16, 18) des ensembles structurels à encoches (6a, 6b) formant la paroi latérale du logement (2).

3. Dispositif de rangement (1) selon l'une quelconque des revendications précédentes, **caractérisé en ce que** ladite structure intermédiaire (19) de chaque ensemble structurel (6a, 6b) est réalisée de manière à former une pièce unique.

4. Dispositif de rangement (1) selon la revendication 3, **caractérisé en ce que** ladite structure intermédiaire (19) de chaque ensemble structurel (6a, 6b) est assemblée rigidement sur les deux plats (16, 18).

5. Dispositif de rangement (1) selon la revendication 3, **caractérisé en ce que** ladite structure intermédiaire (19) d'un ensemble structurel donné (6a, 6b) est maintenue dans une direction d'empilement (8) à l'aide des ensembles structurels (6a, 6b) disposés de façon croisée par rapport à l'ensemble donné (6a, 6b), et lui étant directement consécutifs dans la direction d'empilement (8).

6. Dispositif de rangement (1) selon l'une quelconque des revendications précédentes, **caractérisé en ce que** ladite structure intermédiaire (119) de chaque ensemble structurel (6a, 6b) comprend deux barres en acier (146, 148) espacées l'une de l'autre par des moyens d'espacement (150).

7. Dispositif de rangement (1) selon la revendication 6, **caractérisé en ce que** pour chaque ensemble structurel (6a, 6b), lesdits moyens d'espacement (150) sont assemblés rigidement aux deux plats (16, 18) dudit ensemble structurel (6a, 6b), et **en ce que** les deux barres en acier (146, 148) sont respectivement situées de part et d'autre desdits moyens d'espacement (150), par rapport à une direction d'empilement (8) des ensembles structurels (6a, 6b).

8. Dispositif de rangement (1) selon la revendication 7, **caractérisé en ce que** chaque barre (146, 148) d'un ensemble structurel donné (6a, 6b) est maintenue dans la direction d'empilement (8) d'une part à l'aide des moyens d'espacement (150), et d'autre part à l'aide des ensembles structurels (6a, 6b) disposés de façon croisée par rapport audit ensemble donné, et lui étant directement consécutifs dans la direction d'empilement (8).

9. Dispositif de rangement (1) selon l'une quelconque des revendications 6 à 8, **caractérisé en ce que** lesdits moyens d'espacement (150) de chaque ensemble structurel (6a, 6b) comprennent une pluralité d'entretoises (152), chacune traversée par des moyens de fixation (154) la reliant rigidement aux deux plats (16, 18) de l'ensemble structurel (6a, 6b).

10. Dispositif de rangement (1) selon la revendication 9, **caractérisé en ce que** lesdits moyens de fixation (154) sont choisis parmi les rivets et les assemblages vis/écrou.

11. Dispositif de rangement (1) selon l'une quelconque des revendications 7 à 10, **caractérisé en ce que** lesdites barres (146, 148) de chaque ensemble structurel (6a, 6b) sont disposées perpendiculairement à la direction d'empilement (8).

12. Dispositif de rangement (1) selon l'une quelconque des revendications précédentes, **caractérisé en ce que** pour une couche n quelconque d'ensembles structurels (6b), les ensembles structurels (6a) des couches n+1 et n+3 sont en contact deux à deux au niveau des chants des plats (16, 18) situés entre des entailles (20, 22) prévues sur ces plats, et les ensembles structurels (6b) des couches n et n+2 sont également en contact deux à deux au niveau des chants des plats (16, 18) situés entre des entailles (20, 22) prévues sur ces mêmes plats.

## Patentansprüche

1. Anordnungsvorrichtung (1) zur Lagerung und zum Transport von Kernbrennstoffbündeln, wobei die Vorrichtung mehrere benachbarte Lagerbereiche (2) aufweist, wobei jeder eine Seitenwand aufweist und ein Kernbrennstoffbündel aufnehmen kann, wobei die Seitenwände durch Struktureinheiten mit Einschnitten (6a, 6b) die aufeinander gestapelt und gekreuzt sind, ausgeführt sind, die jeweils zwei beabstandete Platten (16, 18) sowie eine Zwischenstruktur (19, 119), die sich zwischen den Platten (16, 18) befindet und mit diesen in Kontakt ist, aufweisen, wobei jede Struktureinheit mit Einschnitten (6a, 6b) einen Querschnitt in der generellen Form eines H aufweist, wobei die beiden Platten (16, 18) jeweils die beiden Flanken dieses H bilden und die Zwischenstruktur den Kern dieses H bildet,
**dadurch gekennzeichnet, dass** die beiden Platten (16, 18) in einem Neutronen absorbierenden Material aus einer Bor enthaltenden Aluminiumlegierung ausgeführt sind und dass die Zwischenstruktur (19, 119) zumindest teilweise in Stahl ausgeführt ist.

2. Anordnungsvorrichtung (1) nach Anspruch 1, **dadurch gekennzeichnet, dass** jeder Lagerbereich (2) eine diesen begrenzende Seitenfläche (174) aufweist, wobei die Seitenfläche (174) zumindest teilweise von den Platten (16, 18) der Struktureinheiten mit Einschnitten (6a, 6b), die die Seitenwand des Lagerbereichs (2) bilden, gebildet ist.

3. Anordnungsvorrichtung (1) nach einem der vorhergehenden Ansprüche, **dadurch gekennzeichnet, dass** die Zwischenstruktur (19) jeder Struktureinheit (6a, 6b) derart ausgeführt ist, dass sie ein einziges Teil bildet.

4. Anordnungsvorrichtung (1) nach Anspruch 3, **dadurch gekennzeichnet, dass** die Zwischenstruktur (19) jeder Struktureinheit (6a, 6b) starr an den beiden Platten (16, 18) angeordnet ist.

5. Anordnungsvorrichtung (1) nach Anspruch 3, **dadurch gekennzeichnet, dass** die Zwischenstruktur (19) einer gegebenen Struktureinheit (6a, 6b) mittels Struktureinheiten (6a, 6b), die in Bezug auf die gegebene Einheit (6a, 6b) gekreuzt angeordnet sind, und in der Stapelrichtung (8) direkt auf diese folgen, in einer Stapelrichtung (8) gehalten wird.

6. Anordnungsvorrichtung (1) nach einem der vorhergehenden Ansprüche, **dadurch gekennzeichnet, dass** die Zwischenstruktur (119) jeder Struktureinheit (6a, 6b) zwei Stäbe aus Stahl (146, 148), die durch Beabstandungsmittel (150) voneinander beabstandet sind, umfasst.

7. Anordnungsvorrichtung (1) nach Anspruch 6, **dadurch gekennzeichnet, dass** für jede Struktureinheit (6a, 6b) die Beabstandungsmittel (150) starr an den beiden Platten (16, 18) der Struktureinheit (6a, 6b) angebracht sind und dass sich die beiden Stäbe aus Stahl (146, 148) jeweils auf der einen bzw. der anderen Seite der Beabstandungsmittel (150) in Bezug auf eine Stapelrichtung (8) der Struktureinheiten (6a, 6b) befinden.

8. Anordnungsvorrichtung (1) nach Anspruch 7, **dadurch gekennzeichnet, dass** jeder Stab (146, 148) einer gegebenen Struktureinheit (6a, 6b) in der Stapelrichtung (8) einerseits mittels der Beabstandungsmittel (150) und andererseits mittels der Struktureinheiten (6a, 6b), die in Bezug auf die gegebene Einheit gekreuzt angeordnet sind und in der Stapelrichtung (8) direkt auf diese folgen, gehalten wird.

9. Anordnungsvorrichtung (1) nach einem der Ansprüche 6 bis 8, **dadurch gekennzeichnet, dass** die Beabstandungsmittel (150) jeder Struktureinheit (6a, 6b) mehrere Querstreben (152) umfassen, durch die jeweils Befestigungsmittel (154) hindurchgehen, die sie starr mit den beiden Platten (16, 18) der Struktureinheit (6a, 6b) verbinden.

10. Anordnungsvorrichtung (1) nach Anspruch 9, **dadurch gekennzeichnet, dass** die Befestigungsmittel (154) aus Nieten und Schraube/Mutter-Systemen ausgewählt sind.

11. Anordnungsvorrichtung (1) nach einem der Ansprüche 7 bis 10, **dadurch gekennzeichnet, dass** die Stäbe (146, 148) jeder Struktureinheit (6a, 6b) senkrecht zur Stapelrichtung (8) angeordnet sind.

12. Anordnungsvorrichtung (1) nach einem der vorhergehenden Ansprüche, **dadurch gekennzeichnet, dass** für eine Schicht n von einer der Struktureinheiten (6b) die Struktureinheiten (6a) der Schichten n+1 und n+3 paarweise auf der Ebene der Schmalseiten der Platten (16, 18), die sich zwischen den an diesen Platten vorgesehenen Einschnitten (20, 22) befinden, in Kontakt sind und die Struktureinheiten (6b) der Schichten n und n+2 ebenfalls paarweise auf der Ebene der Schmalseiten der Platten (16, 18), die sich zwischen den an eben diesen Platten vorgesehenen Einschnitten (20, 22) befinden, in Kontakt sind.

## Claims

1. Storage device (1) for storing and transporting nuclear fuel assemblies, said device comprising a plurality of adjacent compartments (2), each having a lateral wall and being capable of receiving a nuclear fuel assembly, said lateral walls being made using notched structural units (6a, 6b) that are stacked and crisscrossed, each comprising two spaced-apart flats (16, 18), as well as an intermediate structure (19, 119) situated between the flats (16, 18) and in contact with them, each notched structural unit (6a, 6b) having an overall H-shaped cross section, the two flats (16, 18) constituting the two sides of this H, respectively.
**characterised in that** said two flats (16, 18) are made of neutrophage material an aluminium alloy containing boron, and **in that** said intermediate structure (19, 119) is at least partially made of steel.

2. Storage device (1) as claimed in claim 1, **characterised in that** each compartment (2) has a lateral surface (174) delimiting it, said lateral surface (174) consisting at least partially of the flats (16, 18) of the notched structural units (6a, 6b) forming the lateral wall of said compartment (2).

3. Storage device (1) as claimed in any of the preceding claims, **characterised in that** said intermediate structure (19) of each structural unit (6a, 6b) is made so as to form a single part.

4. Storage device (1) of claim 3, **characterised in that** said intermediate structure (19) of each structural unit (6a, 6b) is rigidly assembled on the two flats (16, 18).

5. Storage device (1) of claim 3, **characterised in that** said intermediate structure (19) of a given structural unit (6a, 6b) is held in a stacking direction (8) with the help of the structural units (6a, 6b) arranged in a crossed fashion in relation to the given unit (6a, 6b) and being directly adjacent to it in the direction of stacking (8).

6. Storage device (1) as claimed in any of the preceding claims, **characterised in that** said intermediate structure (119) of each structural unit (6a, 6b) includes two steel bars (146, 148 spaced apart from each other by spacing means (150).

7. Storage device (1) of claim 6, **characterised in that**, for each structural unit (6a, 6b), said spacing means (150) are rigidly assembled to the two flats (16, 18) of said structural unit (6a, 6b), and **in that** the two steel bars (146, 148) are situated on either side of said spacing means (150), respectively, in relation to a stacking direction (8) of the structural units (6a, 6b).

8. Storage device (1) of claim 7, **characterised in that** each bar (146, 148) of a given structural unit (6a, 6b) is held in the stacking direction (8) with the help of the spacing means (150), on the one hand, and, on the other hand, with the help of the structural units (6a, 6b), which are arranged in a crossed fashion in relation to said given structural unit, and which are directly adjacent to it in the direction of stacking (8).

9. Storage device (1) as claimed in any of claims 6 to 8, **characterised in that** said spacing means (150) of each structural unit (6a, 6b) include a plurality of spacers (152), each of which are penetrated through by fastening means (154) joining them rigidly to the two flats (16, 18) of the structural unit (6a, 6b).

10. Storage device (1) of claim 9, **characterised in that** said fastening means (154) are selected from amongst rivets and screw/nut assemblies.

11. Storage device (1) as claimed in any of claims 7 to 10, **characterised in that** bars (146, 148) of each structural unit (6a, 6b) are arranged perpendicular to the direction of stacking (8).

12. Storage device (1) as claimed in any of the preceding claims, **characterised in that** for any given layer n of structural units (6b), the structural units (6a) of the layers n+1 and n+3 are in contact in pairs with the edges of the flats (16, 18) situated between the cut-outs (20, 22) provided on these flats, and the structural units (6b) of the layers n and n+2 are likewise in contact in pairs with edges of the flats (16, 18) situated between the cut-outs (20, 22) provided on these same flats.
